# EUROPÄISCHE PATENTSCHRIFT

(11) **EP 1 541 804 B1**
(45) Veröffentlichungstag und Bekanntmachung des Hinweises auf die Patenterteilung: **16.11.2016**
(21) Anmeldenummer: 04104337.3
(22) Anmeldetag: 09.09.2004
(51) Int. Cl.: F01D 5/00, F01D 25/28, B23P 19/02

(54) **Abziehwerkzeug zum Abziehen einer Laufschaufel**
Rotor blade pulling-off tool
Outil d'extraction d'aube de rotor

(30) Priorität: 24.09.2003 DE 10344098
(43) Veröffentlichungstag der Anmeldung: 15.06.2005
(73) Patentinhaber: General Electric Technology GmbH, 5400 Baden (CH)
(72) Erfinder: Anner, Emil, 5432 Neuenhof (CH); Sloutski, Edouard, 125239 Moskau (RU); Tchekanov, Alexandre, 129336 Moskau (RU); Tschuor, Remigi, 8610 Uster (CH)
(74) Vertreter: Bernotti, Andrea

(56) Entgegenhaltungen:
- EP-A1- 0 013 772
- GB-A- 739 870
- GB-A- 1 209 419
- US-A- 4 566 857
- US-A1- 2001 032 389

## Beschreibung

### Technisches Gebiet

Die vorliegende Erfindung betrifft ein Abziehwerkzeug zum Abziehen einer Laufschaufel von einem Rotor einer Strömungsmaschine.

### Stand der Technik

Die Laufschaufeln einer Strömungsmaschine besitzen üblicherweise ein aerodynamisches Blatt sowie einen Fuß, mit dem die Laufschaufel in einem Rotor der Strömungsmaschine verankert werden kann. Zu diesem Zweck kann der Fuß an einer vom Blatt abgewandten Seite einen Verankerungsabschnitt aufweisen, der in eine dazu komplementäre, bezüglich der Rotationsachse des Rotors axiale Verankerungsnut axial einschiebbar ist. Der Verankerungsabschnitt und die Verankerungsnut sind dabei hinsichtlich ihrer Formgebung so aufeinander abgestimmt, dass sich zwischen dem Verankerungsabschnitt und der Verankerungsnut in radialer Richtung ein Formschluss ergibt, durch den die Laufschaufel am Rotor radial festgelegt bzw. verankert ist. Im Betrieb des Rotors sind die Laufschaufeln, insbesondere bei einer Gasturbine, sehr hohen Belastungen ausgesetzt, die zu einer plastischen Verformung insbesondere im Bereich des Verankerungsabschnitts und der Verankerungsnut führen können. Darüber hinaus kann es im Bereich des Verankerungsabschnitts und der Verankerungsnut zu Verschmutzungen kommen. Sofern ein äußeres Deckband vorhanden ist, können sich in Umfangsrichtung benachbarte Laufschaufeln verhängen oder verhaken. Für Wartungszwecke, Inspektionen und Reparaturen kann es erforderlich sein, eine oder mehrere Laufschaufeln vom Rotor zu demontieren. Hierzu müssen die Laufschaufeln aus der Verankerungsnut wieder herausgeschoben werden. Durch die angesprochenen Belastungen sitzen die Laufschaufeln mitunter sehr fest, so dass zum Austreiben der Laufschaufeln auch ein Holzhammer oder ein Kunststoffhammer zur Anwendung kommen kann. Hierdurch kann es allerdings zu Beschädigungen der Laufschaufeln kommen. Wenn darüber hinaus mehrere Laufschaufeln über das äußere Deckband miteinander verhangen bzw. miteinander gekoppelt sind, müssen diese Laufschaufeln quasi gleichzeitig aus den Verankerungsnuten herausgeschoben werden, wodurch sich das zuvor beschriebene Problem vervielfacht.

Die Druckschrift EP 1149662 offenbart eine Lösung zur Demontage einer Turbinenschaufel, wonach jene mit Hilfe einer Abziehvorrichtung aus der Schaufelnut herausgezogen werden. Die Abziehvorrichtung besitzt einen Hakenschieber, welcher in einen Spalt zwischen dem Grund der Schaufelnut und der Schaufelunterseite eingeführt wird. Hakenartige Vorsprünge greifen formschlüssig in Kühlluftlöcher oder andere Öffnungen am Schaufelgrund ein. Der Hakenschieber wird von einem hydraulisch angetriebenen Kolben beaufschlagt, der mit einem Zylinder zusammenwirkt, welcher sich über wenigstens zwei Stützsäulen am Rotor oder Stator abstützt. Durch Inbetriebnahme einer Hydraulikpumpe übt der Kolben eine Kraft auf den Hakenschieber aus, bis sich jener eine Bewegung setzt und die Turbinenschaufel aus der Schaufelnut herauszieht.

Aufbau und Anwendung der in dieser Druckschrift vorgestellten Abziehvorrichtung sind relativ aufwändig. Insbesondere ist sie an die Existenz eines hinreichend bemessenen Spalts zwischen Schaufelfuß und Nutgrund angewiesen. Dieser Spalt ist aber nicht immer vorhanden.

Die Druckschriften GB 739870, GB 1209419, US 4566857 beschreiben Arretiereinrichtungen zur individuellen Axialbefestigung und -positionierung von Turbinenschaufeln auf einem Rotor.
Die in diesen Schriften vorgestellten Lösungen dienen insbesondere dem Ziel, die Schaufeln nach deren Einbau effektiv in ihrer Lage zu sichern und diese Sicherung bei Bedarf mit geringem Aufwand wieder lösen zu können. Diesen Druckschriften sind jedoch keine Anregungen im Hinblick auf das Austreiben fest sitzender oder mit Deckband ausgerüsteter Schaufeln zu entnehmen.

### Darstellung der Erfindung

Hier will die Erfindung Abhilfe schaffen. Die Erfindung, wie sie in den Ansprüchen gekennzeichnet ist, beschäftigt sich mit dem Problem, für Laufschaufeln der eingangs genannten Art einen Weg aufzuzeigen, der das Entfernen der Laufschaufeln vom Rotor der Strömungsmaschine vereinfacht und für das simultane Abziehen mehrerer Laufschaufeln ausgebildet ist.

Erfindungsgemäß wird dieses Problem durch den Gegenstand des Anspruchs 1 gelöst. Vorteilhafte Ausführungsformen sind Gegenstand der abhängigen Ansprüche.

Die Erfindung beruht auf dem allgemeinen Gedanken, die einzelnen Laufschaufeln jeweils an einer axialen Stirnseite des Fußes mit wenigstens einer Abziehkontur auszustatten, die es ermöglicht, über ein dazu komplementäres Abziehglied die erforderlichen axialen Abziehkräfte in die jeweilige Laufschaufel einzuleiten. Zum Antrieb des Abziehglieds wird ein Abziehwerkzeug vorgeschlagen, das sich beim Abziehen der jeweiligen Laufschaufel am Rotor abstützt. Mit Hilfe der Abziehkontur wird an der Laufschaufel somit eine Krafteinleitstelle bereitgestellt bzw. integral ausgeformt, was die Einleitung der erforderlichen Abziehkräfte in die Laufschaufel erheblich vereinfacht. Darüber hinaus kann die Position der Abziehkontur an der Laufschaufel so vorgegeben werden, dass die Gefahr einer Verkantung der Laufschaufel beim Abziehen reduziert ist.

Die an der Laufschaufel ausgebildete Abziehkontur kann beispielsweise eine in die Stirnseite des Fußes eingebrachte axiale Gewindebohrung sein. Das hierzu komplementäre Abziehglied ist dann durch einen Gewindebolzen gebildet, der in die Gewindeöffnung einschraubbar ist. Über eine derartige Gewinde-Verbindung können sehr hohe Abziehkräfte übertragen werden. Allerdings steht an der Laufschaufel relativ wenig Platz zur Verfügung, eine derartige Gewindebohrung einzubringen. Desweiteren ist eine derartige Gewindebohrung anfällig gegenüber Verschmutzungen.

Entsprechend einer bevorzugten Ausführungsform besitzt die Abziehkontur einen Steg, der sich quer zur Axialrichtung und quer zur Radialrichtung erstreckt und der einen Hinterschnitt bildet. Das Abziehglied kann dann zum Abziehen der Laufschaufel vom Rotor in den Hinterschnitt eingreifen und die axiale Abziehkraft über den Steg in die Laufschaufel einleiten. Für einen derartigen Steg steht am Fuß der Laufschaufel hinreichend Bauraum zur Verfügung. Des weiteren kann ein derartiger Steg bei einer entsprechenden Anordnung relativ gut gereinigt werden. Außerdem lässt sich ein derartiger Steg ohne weiters so dimensionieren, dass hinreichend große Abziehkräfte übertragen werden können.

Das Abziehwerkzeug besitzt eine Antriebseinrichtung, die beim Abziehen der wenigstens einen Laufschaufel vom Rotor das Abziehglied in Abziehrichtung axial antreibt. Diese Antriebseinrichtung weist einen Schlitten auf, der das Abziehglied trägt und mittels eines Antriebs axial entlang einer Konsole verstellbar ist, die eine Abstützkontur aufweist, über die sich das Abziehwerkzeug beim Abziehen der Laufschaufel am Rotor axial abstützt. Durch die Abstützung der Reaktionskräfte am Rotor ergibt sich ein in sich geschlossener Kraftfluss, der ohne eine externe Abstützung der Reaktionskräfte auskommt und somit die Einleitung der Abziehkräfte erheblich vereinfacht. Die Konsole besitzt einen die Abstützkontur aufweisenden Träger, der als Ring oder Ringsegment ausgebildet ist, der bzw. das koaxial zum Rotor angeordnet ist, wenn das Abziehwerkzeug bestimmungsgemäß am Rotor angesetzt ist. Dieser Träger weist dann mehrere Schlitten und/oder mehrere Antriebe auf, so dass es möglich ist, simultan mehrere Laufschaufeln gleichzeitig vom Rotor abzuziehen. Dies ist insbesondere dann von Bedeutung, wenn mehrere Laufschaufeln über ein äußeres Deckband miteinander verhakt sind.

Weitere wichtige Merkmale und Vorteile der vorliegenden Erfindung ergeben sich aus den abhängigen Ansprüchen, aus den Zeichnungen und aus der zugehörigen Figurenbeschreibung anhand der Zeichnungen.

### Kurze Beschreibung der Zeichnungen

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder ähnliche oder funktional gleiche Bauteile beziehen. Es zeigen, jeweils schematisch,
- Fig. 1: einen Längsschnitt durch einen Rotor einer Strömungsmaschine beim Abziehen einer Laufschaufel,
- Fig. 2: eine vergrößerte Ansicht auf ein Detail II in Fig. 1, das einer Schnittansicht gemäß Schnittlinien II in Fig. 5 entspricht,
- Fig. 3: eine Schnittansicht entsprechend Schnittlinien III in Fig. 2,
- Fig. 4: eine Ansicht entsprechend einem Pfeil IV in Fig. 3,
- Fig. 5: eine Ansicht auf einen Fuß der Laufschaufel entsprechend einem Pfeil V in Fig. 1.

### Wege zur Ausführung der Erfindung

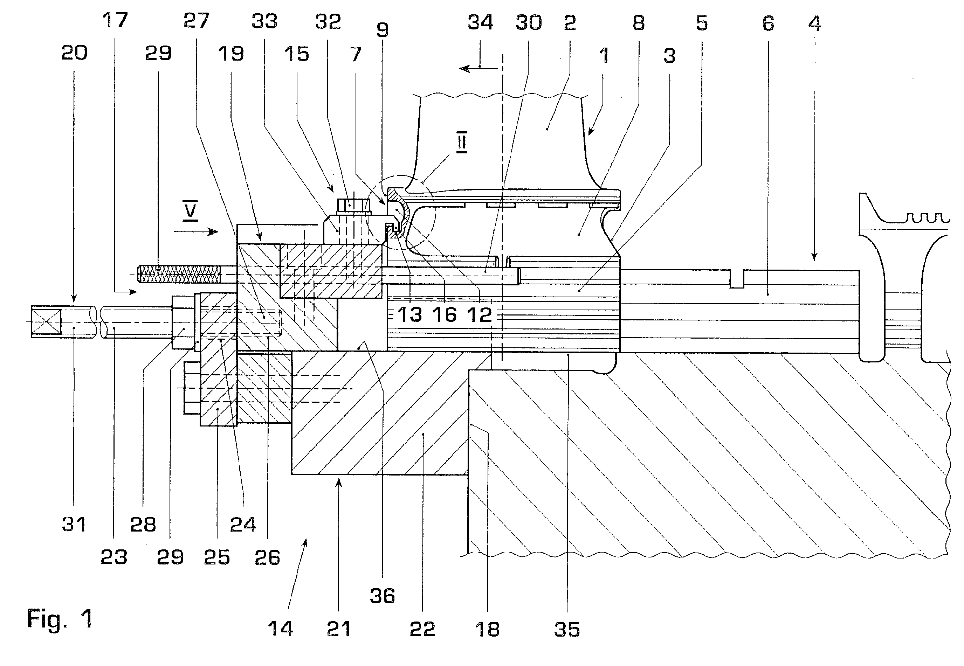

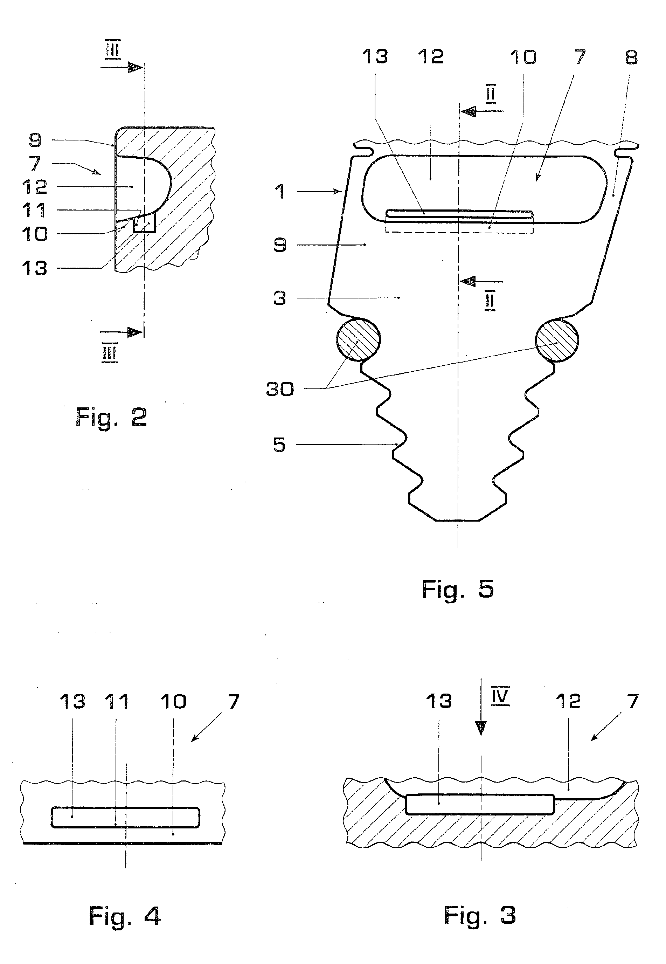

Entsprechend Fig. 1 besitzt eine Laufschaufel 1 in üblicher Weise ein aerodynamisch geformtes Blatt 2, das zur Strömungsführung dient, sowie einen Fuß 3, mit dem die Laufschaufel 1 an einem Rotor 4 einer Strömungsmaschine, z.B. einer Turbine oder eines Verdichters, befestigt werden kann. Entsprechend den Fig. 1 und 5 ist für diese Befestigungszwecke am Fuß 3 an einer vom Blatt 2 abgewandten Seite ein Verankerungsabschnitt 5 ausgebildet, der an in Umfangsrichtung des Rotors 4 voneinander abgewandten Seiten jeweils eine Art Verzahnung aufweist, wobei diese Verzahnungen in Richtung auf eine Rotationsachse des Rotors 4 konvergieren. Eine derartige Verzahnungskontur wird auch als "Tannenbaumverzahnung" bezeichnet.

Entsprechend Fig. 1 besitzt der Rotor 4 für jede Laufschaufel 1 eine axiale, d.h. parallel zur Rotationsachse des Rotors 4 verlaufende Verankerungsnut 6, die komplementär zum Verankerungsabschnitt 5 der Laufschaufel 1 geformt ist. Dementsprechend besitzt die Verankerungsnut 6 hier ebenfalls an Wänden, die einander in Umfangsrichtung des Rotors 4 gegenüberliegen, zur Rotationsachse des Rotors 4 hin konvergierende Achsialverzahnungen.

Die einzelnen Zähne dieser Verzahnung erstrecken sich dabei in Axialrichtung, also parallel zur Rotationsachse des Rotors 4, so dass der Verankerungsabschnitt 5 und die Verankerungsnut 6 dementsprechend Längsverzahnungen aufweisen.

Die Verankerungsnut 6 ist zumindest an einer axialen Seite, gemäß Fig. 1 links, offen, so dass die Laufschaufel 1 an dieser offenen Seite der Verankerungsnut 6 mit ihrem Verankerungsabschnitt 5 axial angesetzt und aufgeschoben werden kann. Hierbei wird der Verankerungsabschnitt 5 axial in die Verankerungsnut 6 eingeschoben. Hierdurch kommen die komplementären Formschlusskonturen von Verankerungsabschnitt 5 und Verankerungsnut 6, also hier die Verzahnungen, miteinander in Eingriff, derart, dass die aufgeschobene Laufschaufel 1 in radialer Richtung durch den sich zwischen Verankerungsabschnitt 5 und Verankerungsnut 6 ausbildenden Formschluss am Rotor 4 befestigt bzw. verankert ist.

Erfindungsgemäß ist nun die Laufschaufel 1 außerdem mit einer Abziehkontur 7 ausgestattet, an der axiale Abziehkräfte in die Laufschaufel 1 einleitbar sind.

Diese Abziehkontur 7 ist dabei am Fuß 3, und zwar insbesondere an einem vom Verankerungsabschnitt 5 entfernten Abschnitt 8 des Fußes 3 angeordnet. Bei der hier dargestellten bevorzugten Ausführungsform ist die Abziehkontur 7 an einer axialen Stirnseite 9 des Fußes 3 ausgebildet. Da es sich bei einer Laufschaufel 1 üblicherweise um ein einteiliges und einstückiges Bauteil handelt, ist die Abziehkontur 7 vorzugsweise ein integraler Bestandteil der Laufschaufel 1 und kein nachträglich angebautes Bauteil.

Bei der hier gezeigten Ausführungsform ist die Laufschaufel 1 mit nur einer einzigen Abziehkontur 7 ausgestattet. Es ist klar, dass die Laufschaufel 1 grundsätzlich auch mit mehreren Abziehkonturen 7 ausgestattet sein kann, was insbesondere vom Platzbedarf der jeweiligen Variante der gewählten Abziehkontur 7 abhängt.

Entsprechend den Fig. 1 bis 5 besitzt die hier gezeigte, bevorzugte Abziehkontur 7 einen Steg 10, der so angeordnet ist, dass er sich quer zur Axialrichtung und quer zur Radialrichtung, jeweils bezogen auf den Rotor 4, erstreckt, also quasi tangential zur Umfangsrichtung des Rotors 4. Des weiteren ist der Steg 10 so angeordnet, dass er am Fuß 3 einen Hinterschnitt 11 bildet. An diesem Hinterschnitt 11 können nun die erforderlichen Abziehkräfte auf den Steg 10 aufgebracht und somit in die Laufschaufel 1 eingeleitet werden.

Vorzugsweise besitzt der Fuß 3 an seiner Stirnseite 9 eine axial offene Kavität 12, in welcher der Steg 10 und der Hinterschnitt 11 ausgebildet sind. Hierdurch kann die Abziehkontur 7 mit einem relativ kleinen zusätzlichen Gewicht und bei einem vergleichsweise geringen Raumbedarf in die Laufschaufel 1 bzw. in deren Fuß 3 integriert werden. Steg 10 und Hinterschnitt 11 lassen sich in der Kavität 12 besonders einfach mittels einer Nut 13 herstellen, die in der Kavität 12 in den Fuß 3 eingearbeitet ist. Die Nut 13 ist dabei ebenfalls quer zur Axialrichtung und quer zur Radialrichtung des Rotors 4, also tangential, orientiert. Vorzugsweise ist die Nut 13, wie hier dargestellt, in einem dem Verankerungsabschnitt 5 zugewandten Bereich der Kavität 12 angeordnet, so dass die Nut 13 an einer vom Verankerungsabschnitt 5 abgewandten Seite offen ist.

Die Kavität 12 kann bereits in einer Gießform zur Herstellung der Laufschaufel 1 berücksichtigt sein, was die Herstellung der Kavität 12 vereinfacht. Grundsätzlich können auch Steg 10 und Hinterschnitt 11 bzw. Nut 13 beim Gießen der Laufschaufel 1 integral ausgebildet werden. Ebenso ist es möglich, die Nut 13 und somit Steg 10 und Hinterschnitt 11 in der Kavität 12 durch spannabhebende Bearbeitung, z.B. durch Erodieren, nachträglich einzubringen.

Obwohl die hier dargestellte Abziehkontur 7 mit Steg 10 und Hinterschnitt 11 besonders vorteilhaft zur Einleitung der erforderlich Abziehkräfte ist, kann die Abziehkontur 7 grundsätzlich auch jede beliebige andere geeignete Gestalt aufweisen. Beispielhaft sei hier eine weitere Variante genannt, bei welcher die Abziehkontur 7 durch eine Gewindebohrung gebildet ist, die in die axiale Stirnseite 9 des Fußes 3 eingebracht ist und sich dabei in Axialrichtung erstreckt.

Aufgrund der im Betrieb herrschenden hohen Belastungen der Laufschaufel 1 kann es unter anderem im Bereich des Verankerungsabschnitts 5 und der Verankerungsnut 6 zu plastischen Verformungen und/oder zu Verschmutzungen kommen, die ein axialer Abziehen der Laufschaufel 1 vom Rotor 4 erschweren. Entsprechend Fig. 1 schlägt die vorliegende Erfindung zum Abziehen der Laufschaufel 1 vom Rotor 4 ein Abziehwerkzeug 14 vor.

Dieses Abziehwerkzeug 14 besitzt zumindest ein Abziehglied 15, das komplementär zur Abziehkontur 7 ausgebildet ist. Im vorliegenden Fall weist das Abziehglied 15 einen Haken 16 auf, der in die Nut 13 eingreifen kann. Das bedeutet, dass der Haken 16 so geformt ist, dass er den Steg 10 hintergreifen kann und so in den Hinterschnitt 11 eingreifen kann. Auf diese Weise kann das Abziehglied 15 über seinen Haken 16 die erforderlichen Abziehkräfte in die Abziehkontur 7 der Laufschaufel 1 einleiten.

Das Abziehwerkzeug 14 ist außerdem mit einer Antriebseinrichtung 17 ausgestattet, mit deren Hilfe das Abziehglied 15 in Axialrichtung antreibbar ist. Des weiteren umfasst das Abziehwerkzeug 14 eine Abstützkontur 18, mit deren Hilfe das Abstützwerkzeug 14 am Rotor 4 axial abstützbar ist.

Bei der hier gezeigten Ausführungsform weist die Antriebseinrichtung 17 einen Schlitten 19 sowie einen Antrieb 20 auf. Der Schlitten 19 trägt das Abziehglied 15 und ist mit Hilfe des Antriebs 20 relativ zu einer Konsole 21 verstellbar. Die Konsole 21 ist mit der Abstützkontur 18 ausgestattet. Im vorliegenden Fall besitzt die Konsole 21 einen Träger 22, an dem die Abstützkontur 18 ausgebildet ist.

Bei der hier gezeigten Ausführungsform ist der Antrieb 20 mit einer axialen Gewindestange 23 ausgestattet, die eine Durchgangsbohrung 24 durchsetzt. Diese Durchgangsbohrung 24 ist an der Konsole 21 oder wie hier an einem Bauteil 25 ausgebildet, das an der Konsole 21 befestigt ist. Ein erstes Ende 27 der Gewindestange 23 ist am Schlitten 19 befestigt. Zweckmäßig weist der Schlitten 19 hierzu eine Gewindebohrung 26 auf, in welche das erste Ende 27 der Gewindestange 23 eingeschraubt ist. Auf die Gewindestange 23 ist nun an einer vom Schlitten 19 abgewandten Seite eine Mutter 28 aufgeschraubt, die sich z.B. über eine Scheibe an der Konsole 21 bzw. am Bauteil 25 axial abstützt.

Bei der hier gezeigten bevorzugten Ausführungsform des Abziehwerkzeugs 14 ist außerdem eine Halteeinrichtung 29 vorgesehen, die es ermöglicht, die Laufschaufel 1 beim Abziehen seitlich, also in Umfangsrichtung abzustützen. Entsprechend den Fig. 1 und 5 besitzt die Halteeinrichtung 29 beispielsweise zwei Stangen 30, die im Schlitten 19 axial verschiebbar gelagert sind und die so angeordnet und dimensioniert sind, dass sie mit dem Verankerungsabschnitt 5 zur seitlichen Abstützung der Laufschaufel 1 zusammenwirken können. Beispielsweise greifen die Stangen 30 in die seitlichen Verzahnungen des Verankerungsabschnitts 5 ein. Die Laufschaufel 1 kann dadurch sicher am Schlitten 19 gehalten werden.

Es ist klar, dass das Abziehglied 15 grundsätzlich auch eine andere Gestalt aufweisen kann. Beispielhaft sei auch hier eine Variante erwähnt, bei welcher das Abziehglied 15 als Gewindebolzen ausgebildet sein kann, der in eine dazu komplementäre, als Gewindebohrung ausgebildete Abziehkontur 7 einschraubbar ist.

Grundsätzlich kann das Abziehwerkzeug 14 so ausgestaltet sein, dass damit genau eine Laufschaufel 1 vom Rotor 4 abziehbar ist. Zweckmäßig ist jedoch eine Ausführungsform, bei welcher das Abziehwerkzeug 14 so gestaltet ist, dass damit mehrere in Umfangsrichtung benachbarte Laufschaufeln 1 im wesentlichen gleichzeitig vom Rotor 4 abgezogen werden können. Dies ist insbesondere dann von Vorteil, wenn mehrere Laufschaufel 1 über ein äußeres Deckband miteinander verhakt sind und diese Verhakung erst dann lösbar ist, wenn die Laufschaufeln 1 vom Rotor 4 abgezogen sind. Bei einer derartigen Ausführungsform kann dann der Träger 22 als Ring oder als Ringsegment ausgebildet sein, wobei der Ring bzw. das Ringsegment dann so dimensioniert ist, dass er/es beim Abziehen der Laufschaufeln 1 koaxial zum Rotor 4 an diesem angeordnet werden kann. An diesem Träger 22 können dann mehrere Schlitten 19 und/oder mehrere Antriebe 20 gehaltert sein.

Das erfindungsgemäße Abziehwerkzeug 14 arbeitet wie folgt:
Im Ausgangszustand befindet sich die Laufschaufel 1 bzw. deren Verankerungsabschnitt 5 noch vollständig in der Verankerungsnut 6 des Rotors 4. Das Abziehwerkzeug 14 wird an den Rotor 4 angesetzt, so dass sich die Abstützkontur 18 axial am Rotor 4 abstützt. Der Schlitten 19 ist maximal zur Laufschaufel 1 hin verstellt. Die Mutter 28 befindet sich dann an einem vom Schlitten 19 entfernten zweiten Ende 31 der Gewindestange 23 und stützt sich an der Konsole 21 bzw. an deren Bauteil 25 axial ab. Die Gewindestange 23 ist dementsprechend zur Laufschaufel 1 hin axial verstellt. Nun kann das Abziehglied 15 mit der Abziehkontur 7 in Eingriff gebracht und fest mit dem Schlitten 19 verbunden werden. Hierzu wird das Abziehglied 15 beispielsweise mit einer Schraube 32 am Schlitten 19 festgelegt. Das Abziehglied 15 kann hierbei ein axial orientiertes Langloch 33 aufweisen, was die Positionierung des Abziehglieds 15 vereinfacht. Nach dem Anbringen des Abziehglieds 32 greift dessen Haken 16 in die Nut 13 der Abziehkontur 7 ein. Die Stangen 30 der Halteeinrichtung 29 können noch nicht in den Verankerungsabschnitt 5 der Laufschaufel 1 eingreifen und sind daher im Schlitten 19 axial, hier nach links, verstellt.

Zum Abziehen der Laufschaufel 1 vom Rotor 4 kann nun die Mutter 28 angezogen werden. Hierdurch werden Axialkräfte über die Gewindestange 23 in den Schlitten 19 und über das Abziehglied 15 und die Abziehkontur 7 in die Laufschaufel 1 eingeleitet. Da der Krafteinleitungspunkt durch die Anordnung der Abziehkontur 7 für das Abziehen günstig gewählt werden kann, können relativ hohe axiale Kräfte übertragen werden, ohne dass die Gefahr einer Verkantung der Laufschaufel 1 entsteht. Die Laufschaufel 1 setzt sich daher entsprechend einem Pfeil 34 in Bewegung und wird so allmählich vom Rotor 4 abgezogen. Mit fortschreitender Abziehbewegung können die Stangen 30 in die Verzahnung des Verankerungsabschnitts 5 eingeführt werden, um die Laufschaufel 1 seitlich zu sichern. Ab einer vorbestimmten Ausziehstrecke kommt die Laufschaufel 1 bzw. ihr Verankerungsabschnitt 5 mit einer dem Rotor 4 zugewandten Unterseite 35 auf einer der Laufschaufel 1 zugewandten Stützfläche 36 zur Anlage, die an der Konsole 21 bzw. an deren Träger 22 ausgebildet ist und die Laufschaufel 1 dann zusätzlich radial unterstützt.

Von besonderer Bedeutung ist beim erfindungsgemäßen Abziehwerkzeug 14 außerdem, dass Reaktionskräfte, die beim Einleiten der Abziehkräfte in die Laufschaufel 1 entstehen, über die Abstützkontur 18 auf den Rotor 4 abgestützt werden, so dass sich ein in sich geschlossener Kraftfluss ergibt, was die Erzeugung der benötigten, relativ großen Abziehkräfte bzw. deren Abstützung erheblich vereinfacht.

### Bezugszeichenliste

- 1: Laufschaufel
- 2: Blatt
- 3: Fuß
- 4: Rotor
- 5: Verankerungsabschnitt
- 6: Verankerungsnut
- 7: Abziehkontur
- 8: Bereich von 3
- 9: Stirnseite von 3
- 10: Steg
- 11: Hinterschnitt
- 12: Kavität
- 13: Nut
- 14: Abziehwerkzeug
- 15: Abziehglied
- 16: Haken
- 17: Antriebseinrichtung
- 18: Abstützkontur
- 19: Schlitten
- 20: Antrieb
- 21: Konsole
- 22: Träger
- 23: Gewindestange
- 24: Durchgangsbohrung
- 25: Bauteil
- 26: Gewindebohrung
- 27: erstes Ende von 23
- 28: Mutter
- 29: Halteeinrichtung
- 30: Stangen
- 31: zweites Ende von 23
- 32: Schraube
- 33: Langloch
- 34: Abziehrichtung
- 35: Unterseite von 1/5
- 36: Oberseite von 21/22

## Patentansprüche

1. Abziehwerkzeug zum Abziehen einer Laufschaufel oder zum simultanen Abziehen mehrere Laufschaufeln (1) von einem Rotor (4) einer Strömungsmaschine, mit einer Antriebseinrichtung (17), die beim Abziehen der wenigstens eine Laufschaufel (1) vom Rotor (4) ein Abziehglied (15) in Abziehrichtung (34) axial antreibt, und einer Abstützkontur (18), über die sich das Abziehwerkzeug (14) beim Abziehen der wenigstens eine Laufschaufel (1) am Rotor (4) axial abstützt, wobei die Antriebseinrichtung (17) einen Schlitten (19) aufweist, der das Abziehglied (15) trägt und mittels eines Antriebs (20) axial entlang einer die Abstützkontur (18) aufweisenden Konsole (21) verstellbar ist,
**dadurch gekennzeichnet,**
**dass** wenigstens ein Abziehglied (15) zum Abziehen einer Schaufel von der Stirnseite des Schaufelfußes komplementär zu einer an der axialen Stirnseite (9) des Fußes (3) der Laufschaufel (1) ausgebildeten Abziehkontur (7) ausgebildet ist, und dass die Konsole (21) einen die Abstützkontur (18) aufweisenden Träger (22) aufweist, der als Ring oder Ringsegment ausgebildet ist, der/das beim Abziehen der wenigstens eine Laufschaufel (1) koaxial zum Rotor (4) angeordnet ist, der Träger (22) mehrere Schlitten (19) und/oder mehrere Antriebe (20) trägt.

2. Abziehwerkzeug nach Anspruch 1,
**dadurch gekennzeichnet,**
**dass** der Antrieb (20) eine axiale Gewindestange (23) aufweist, die mit einem Ende (27) am Schlitten (19) befestigt ist und eine Durchgangsbohrung (24) durchsetzt, die an der Konsole (21) oder an einem an der Konsole (21) befestigten Bauteil (25) ausgebildet ist, wobei eine Mutter (28) an einer vom Schlitten (19) abgewandten Seite auf die Gewindestange (23) aufgeschraubt ist.

3. Abziehwerkzeug nach einem der Ansprüche 1 oder 2,
**dadurch gekennzeichnet,**
**dass** wenigstens eine Halteeinrichtung (29) vorgesehen ist, die beim Abziehen der wenigstens eine Laufschaufel (1) mit dem Verankerungsabschnitt (5) der Laufschaufel (1) zusammenwirkt und die Laufschaufel (1) seitlich abstützt.

4. Abziehwerkzeug nach einem der Ansprüche 1 bis 3,
**dadurch gekennzeichnet,**
**dass** das Abziehglied (15) einen Haken (16) aufweist, der den Steg (10) der Abziehkontur (7) hintergreift und in den Hinterschnitt (11) der Abziehkontur (7) eingreift.

5. Abziehwerkzeug nach einem der Ansprüche 1 bis 4,
**dadurch gekennzeichnet,**
**dass** das Abziehglied (15) ein in die als Gewindebohrung ausgebildete Abziehkontur (7) einschraubbarer Gewindebolzen ist.

## Claims

1. Pulling tool for pulling a rotor blade (1) or for simultaneously pulling several rotor blades (1) off a rotor (4) of a turbo-machine, with a drive device (17) which drives a pulling element (15) axially in the pulling direction (34) when the at least one rotor blade (1) is pulled off the rotor (4), and with a supporting contour (18) via which the pulling tool (14) rests axially on the rotor (4) when the at least one rotor blade (1) is pulled off, wherein the drive device (17) has a slide (19) which carries the pulling element (15) and can be adjusted by means of a drive (20) axially along a console (21) having the supporting contour (18), **characterised in that** at least one pulling element (15) for pulling a blade from the end face of the blade foot is formed complementary to a pulling contour (7) formed on the axial end face (9) of the foot (3) of the rotor blade (1), and that the console (21) has a carrier (22) having the supporting contour (18) and formed as a ring or ring segment which is arranged coaxially to the rotor (4) when the at least one rotor blade (1) is pulled off, and the carrier (22) carries several slides (19) and/or several drives (20).

2. Pulling tool according to claim 1, **characterised in that** the drive (20) has an axial threaded rod (23) which at one end (27) is fixed to the slide (19) and passes through a continuous bore (24) formed on the console (21) or on a component (25) attached to the console (21), wherein a nut (28) is screwed onto the threaded rod (23) on a side facing away from the slide (19).

3. Pulling tool according to one of claims 1 or 2, **characterised in that** at least one holding device (29) is provided which, when the at least one rotor blade (1) is pulled off, cooperates with the anchoring portion (5) of the rotor blade (1) and supports the rotor blade (1) at the side.

4. Pulling tool according to any of claims 1 to 3, **characterised in that** the pulling element (15) has a hook (16) which reaches behind the web (10) of the pulling contour (7) and engages in the undercut (11) of the pulling contour (7).

5. Pulling tool according to any of claims 1 to 4, **characterised in that** the pulling tool (15) is a threaded bolt which can be screwed into the pulling contour (7) formed as a threaded bore.

## Revendications

1. Outil d'extraction pour l'extraction d'une aube d'un rotor ou pour l'extraction simultanée de plusieurs aubes (1) d'un rotor (4) d'une turbomachine, avec un dispositif d'entraînement (17) qui, lors de l'extraction de l'aube (1) au moins au nombre de un du rotor (4), entraîne un organe d'extraction (15) axialement dans la direction d'extraction (34), et avec un contour d'appui (18) par le biais duquel l'outil d'extraction (14) s'appuie axialement sur le rotor (4) lors de l'extraction de l'aube (1) au moins au nombre de un, le dispositif d'entraînement (17) présentant un chariot (19) qui porte l'organe d'extraction (15) et qui peut être déplacé au moyen d'un entraînement (20) axialement le long d'une console (21) présentant le contour d'appui (18),
**caractérisé en ce**
**qu'**au moins un organe d'extraction (15) destiné à extraire une aube à partir du côté frontal du pied de l'aube est constitué de façon complémentaire par rapport à un contour d'extraction (7) constitué sur le côté frontal (9) axial du pied (3) de l'aube (1) au moins au nombre de un, et en ce que la console (21) présente un support (22), présentant le contour d'appui (18), qui est constitué en tant qu'anneau ou segment d'anneau qui, lors de l'extraction de l'aube (1) au moins au nombre de un, est disposé de façon coaxiale au rotor (4), le support (22) porte plusieurs chariots (19) et/ou plusieurs entraînements (20).

2. Outil d'extraction selon la revendication 1,
**caractérisé en ce que**
l'entraînement (20) présente une tige filetée (23) axiale qui est fixée par une extrémité (27) sur le chariot (19) et traverse un trou débouchant (24) qui est constitué sur la console (21) ou sur un composant (25) fixé sur la console (21), un écrou (28) étant vissé sur la tige filetée (23) sur un côté éloigné du chariot (19).

3. Outil d'extraction selon l'une des revendications 1 ou 2,
**caractérisé en ce**
**qu'**il est prévu au moins un dispositif de retenue (29) qui, lors de l'extraction de l'aube (1) au moins au nombre de un, coopère avec le tronçon d'ancrage (5) de l'aube (1) et soutient latéralement l'aube (1).

4. Outil d'extraction selon l'une des revendications 1 à 3,
**caractérisé en ce que**
l'organe d'extraction (15) présente un crochet (16) qui agrippe par l'arrière la nervure (10) du contour d'extraction (7) et engrène dans la contre-dépouille (11) du contour d'extraction (7).

5. Outil d'extraction selon l'une des revendications 1 à 4,
**caractérisé en ce que**
l'organe d'extraction (15) est un goujon fileté pouvant être vissé dans le contour d'extraction (7) constitué en tant qu'alésage fileté.
